# EUROPEAN PATENT APPLICATION

(11) **EP 4 418 003 A1**
(43) Date of publication of application: **21.08.2024**
(21) Application number: 23193401.9
(22) Date of filing: 25.08.2023
(51) Int. Cl.: G01S 7/484, G01S 7/4865, G01S 17/42, G01S 17/86, G01S 17/931, G01S 7/481

(54) **RANGING APPARATUS AND RANGING SYSTEM**

(30) Priority: 16.02.2023 JP 2023022701
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: KIMURA, Katsuyuki, Minato-ku, Tokyo, 105-0023 (JP); KUBOTA, Hiroshi, Minato-ku, Tokyo, 105-0023 (JP); JOBASHI, Masashi, Minato-ku, Tokyo, 105-0023 (JP); HADA, Ryuji, Minato-ku, Tokyo, 105-0023 (JP); NAKANO, Takahisa, Kawasaki-shi, Kanagawa, 212-0013 (JP); KOBAYASHI, Hiroyuki, Kawasaki-shi, Kanagawa, 212-0013 (JP); TAKAHASHI, Yusuke, Kawasaki-shi, Kanagawa, 212-0013 (JP); OODAKE, Tatsuya, Kawasaki-shi, Kanagawa, 212-0013 (JP); SETO, Naoto, Kawasaki-shi, Kanagawa, 212-0013 (JP); SUZUKI, Yoshihiko, Kawasaki-shi, Kanagawa, 212-0013 (JP)
(74) Representative: Hoffmann Eitle

(57) **Abstract**

According to one arrangement, a ranging apparatus includes a light source (23), a movable mirror (251), a light sensor (26), a measurement circuit (27), and a first control circuit (21). The movable mirror reflects each of first and second laser lights. The second laser light corresponds to the first laser light reflected by an external subject. The light sensor detects the second laser light reflected by the movable mirror. The measurement circuit measures a distance to the subject based on a timing of emission of the first laser light by the light source and a timing of detection of the second laser light by the light sensor. The first control circuit changes an emission direction of the first laser light based on a first signal from outside.

## Description

### FIELD

Arrangements described herein relate generally to a ranging apparatus and a ranging system.

### BACKGROUND

A ranging apparatus called LiDAR (Light Detection and Ranging) is known. A LiDAR emits laser light to a ranging target. The emitted laser light is reflected by the ranging target, and detected by an optical sensor of the LiDAR. In this manner, the LiDAR is capable of measuring a distance between the LiDAR and the ranging target on the basis of the time at which the laser light was emitted and the time at which the laser light reflected by the ranging target was detected. In a LiDAR, the angle of view and the resolution of distance information that can be acquired has a trade-off relation.

### BRIEF DESCRIPTION OF THE DRAWINGS

FIG. 1 is a schematic diagram illustrating an example of a configuration of a ranging system according to a first arrangement.
FIG. 2 is a block diagram illustrating an example of a configuration of an information processing apparatus according to the first arrangement.
FIG. 3 is a block diagram illustrating an example of a configuration of a ranging apparatus according to the first arrangement.
FIG. 4 is a schematic diagram illustrating an example of a configuration of an optical system included in the ranging apparatus according to the first arrangement.
FIG. 5 is a schematic diagram illustrating an example of a configuration of a scan area scanned by the ranging apparatus according to the first arrangement.
FIG. 6 is a timing chart illustrating an example of setting a ranging direction in the ranging apparatus according to the first arrangement.
FIG. 7 is a block diagram illustrating an example of a functional configuration of the ranging system according to the first arrangement.
FIG. 8 is a flowchart illustrating an example of a ranging operation of the ranging system according to the first arrangement.
FIG. 9 is a schematic diagram illustrating an example of a configuration of a ranging system according to a second arrangement.
FIG. 10 is a block diagram illustrating an example of a functional configuration of a ranging system according to the second arrangement.
FIG. 11 is a block diagram illustrating an example of a configuration of a ranging system according to a third arrangement.
FIG. 12 is a block diagram illustrating an example of a functional configuration of a ranging system according to the third arrangement.
FIG. 13 is a flowchart illustrating an example of a ranging direction adjusting operation of the ranging system according to the third arrangement.
FIG. 14 is a schematic diagram illustrating an example of adjustment of the ranging direction with the ranging system according to the third arrangement.
FIG. 15 is a block diagram illustrating an example of a functional configuration of a ranging system according to a fourth arrangement.
FIG. 16 is a flowchart illustrating an example of a ranging direction adjusting operation of the ranging system according to the fourth arrangement.
FIG. 17 is a schematic diagram illustrating an example of adjustment of the ranging direction with the ranging system according to the fourth arrangement.
FIG. 18 is a block diagram an example of a functional configuration of a ranging system according to a fifth arrangement.
FIG. 19 is a flowchart illustrating an example of a ranging direction adjusting operation of the ranging system according to the fifth arrangement.
FIG. 20 is a schematic diagram illustrating an example of adjustment of the ranging direction with the ranging system according to the fifth arrangement.
FIG. 21 is a table illustrating an example of setting information stored in an information processing apparatus according to a sixth arrangement.
FIG. 22 is a flowchart illustrating an example of a ranging direction adjusting operation of the ranging system according to the sixth arrangement.

### DETAILED DESCRIPTION

In general, according to one arrangement, a ranging apparatus includes a light source (23), a movable mirror (251), a light sensor (26), a measurement circuit (27), and a first control circuit (21). The movable mirror is configured to reflect each of first laser light (LE) and second laser light (LR). The first laser light is emitted from the light source. The second laser light corresponds to the first laser light reflected by an external subject. The light sensor is configured to detect the second laser light reflected by the movable mirror. The measurement circuit is configured to measure a distance to the subject based on a timing of emission of the first laser light by the light source and a timing of detection of the second laser light by the light sensor. The first control circuit is configured to change an emission direction of the first laser light based on a first signal from outside.

Arrangements will now be described hereinafter with reference to drawings. The arrangements illustrate devices and/or methods to realize the technical idea of the invention. The drawings are schematic or conceptual ones. The dimensions and the ratios and the like of the drawings are not necessarily the same as the actual ones. In the following explanations, constituent elements having substantially the same functions and structures are denoted by the same reference numerals.

### <1> First Arrangement

The following is an explanation of a ranging system 1 according to the first arrangement.

### <1-1> Configuration

### <1-1-1> Configuration of Ranging System 1

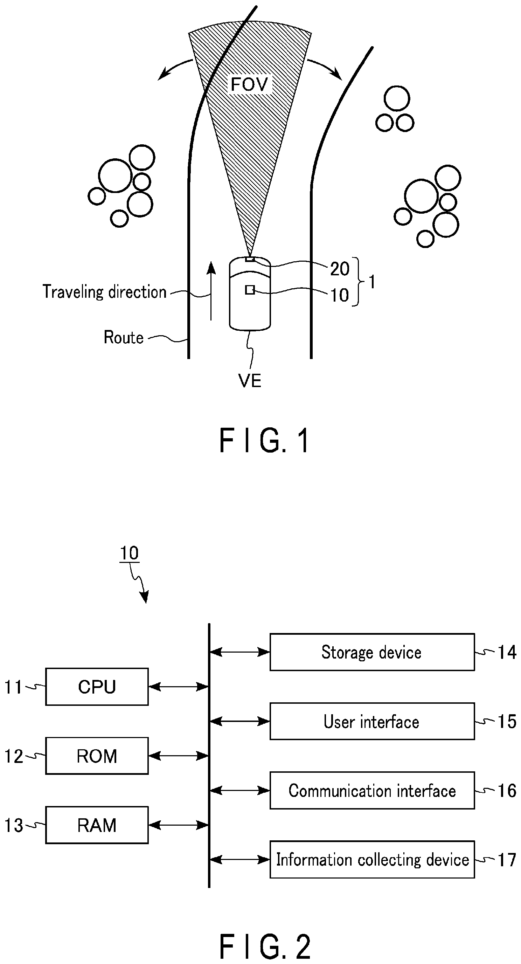

FIG. 1 is a schematic diagram illustrating an example of a configuration of a ranging system according to a first arrangement. FIG. 1 illustrates a state in which a transportation equipment VE including the ranging system 1 is moving through a predetermined route. As illustrated in FIG. 1, the ranging system 1 includes an information processing apparatus 10 and a ranging apparatus 20. The transportation equipment VE is, for example, a vehicle, a train, an airplane, or a ship.

The information processing apparatus 10 includes, for example, a device collecting information, such as its state, a current location of the transportation equipment VE, and a surrounding environment thereof. The information processing apparatus 10 is configured to be capable of controlling the ranging apparatus 20. The information processing apparatus 10 can designate a ranging direction for the ranging apparatus 20. The information processing apparatus 10 may be configured to be capable of controlling acceleration/deceleration and/or the traveling direction of the transportation equipment VE. Specifically, the information processing apparatus 10 may have a function of supporting autonomous traveling of the transportation equipment VE.

The ranging apparatus 20 is a type of a LiDAR. The ranging apparatus 20 emits laser light and detects the laser light reflected by a subject (ranging target). The ranging apparatus 20 measures a distance between the ranging apparatus 20 and the subject on the basis of the time of emission of the laser light and the time of detection of the reflected laser light. The ranging apparatus 20 is mounted (installed) in, for example, a front part of the transportation equipment VE, and acquires distance information of a predetermined angle of view in the traveling direction of the transportation equipment VE. In addition, the ranging apparatus 20 can change the ranging direction without changing the angle of view on the basis of an instruction of the information processing apparatus 20. In the present specification, the angle of view of the ranging apparatus 20, that is, the range in which a distance is measured by the ranging apparatus 20 is also referred to as "FOV (Field Of View)".

### <1-1-2> Configuration of Information Processing Apparatus 10

FIG. 2 is a block diagram illustrating an example of a configuration of the information processing apparatus 10 according to the first arrangement. As illustrated in FIG. 2, the information processing apparatus 10 includes, for example, a CPU (Central Processing Apparatus) 11, a ROM (Read Only Memory) 12, a RAM (Random Access Memory) 13, a storage device 14, a user interface 15, a communication interface 16, and an information collecting device 17.

The CPU 11 is an integrated circuit capable of executing various programs. The CPU 11 controls operations of the whole information processing apparatus 10. The ROM 12 is a nonvolatile semiconductor memory. The ROM 12 stores a control program and/or a control data and the like of the information processing apparatus 10. The RAM 13 is, for example, a volatile semiconductor memory. The RAM 13 is used as a work area of the CPU 11. For example, the control program and/or the control data and the like stored in the ROM 12 are loaded on the RAM 13. The storage device 14 is a storage medium used for storing data and/or programs. The storage device 14 stores, for example, map information including information of the route through which the transportation equipment VE can move.

The user interface 15 is an input interface used by the user. The user can operate the information processing apparatus 10 using the user interface 15. The communication interface 16 is an interface circuit connectable to a network. The communication interface 16 is configured to be capable of communicating with the ranging apparatus 20. Specifically, the information processing apparatus 10 can control the ranging apparatus 20 via the communication interface 16. The information collecting device 17 collects information relating the current location, information relating to the state of the transportation equipment VE, and/or information relating to the surroundings of the transportation equipment VE. The information collecting device 17 includes, for example, a camera and/or a sensor.

The information stored in the storage device 14 may be downloaded via a server on the network. The storage device 14 and/or the information collecting device 17 may be externally connected to the information processing apparatus 10. The information processing apparatus 10 may operate on the basis of control of a terminal on the network, or operate on the basis of information stored in the server on the network. The information processing apparatus 10 may be a system constructed with a plurality of devices connected via the network. The network used by the information processing apparatus 10 may be wired or wireless, or both of wired and wireless networks may be used.

### <1-1-3> Configuration of Ranging Apparatus 20

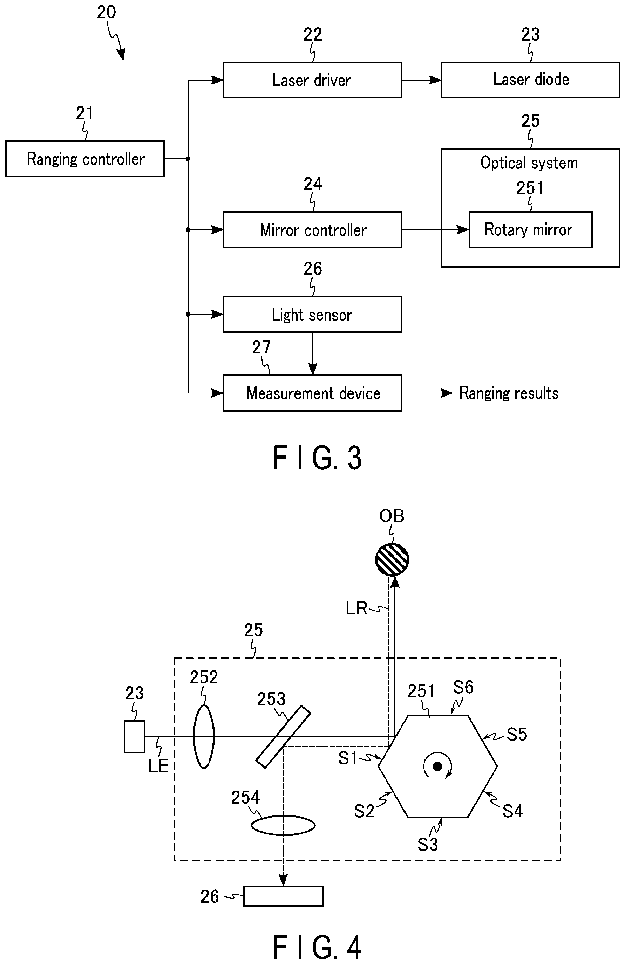

FIG. 3 is a block diagram illustrating an example of a configuration of the ranging apparatus 20 according to the first arrangement. As illustrated in FIG. 3, the ranging apparatus 20 includes, for example, a ranging controller 21, a laser driver 22, a laser diode 23, a mirror controller 24, an optical system 25, a light sensor 26, and a measurement device 27. The optical system 25 includes, for example, a rotary mirror 251.

The ranging controller 21 controls operations of the whole ranging apparatus 20. The ranging controller 21 includes, for example, a CPU, a ROM, a RAM, and an oscillator (not illustrated). The ROM of the ranging controller 21 stores a control program and the like of the ranging apparatus 20. The CPU of the ranging controller 21 controls the laser driver 22, the mirror controller 24, the light sensor 26, and the measurement device 27 in accordance with the control program. The RAM of the ranging controller 21 is used as a work area of the CPU. The oscillator is used for generation of intermittent pulse signals. The ranging controller 21 may be configured to be capable of executing various data processing and arithmetic processing.

The laser driver 22 drives the laser diode 23. Specifically, the laser driver 22 functions as a power supply source of the laser diode 23. The laser diode 23 emits laser light on the basis of a drive current supplied from the laser driver 22. The laser light emitted from the laser diode 23 is made incident on the optical system 25. The ranging controller 21 controls the laser driver 22 such that the laser diode 23 intermittently emits laser light. In the following explanation, the laser light generated on the basis of the pulse signal is also referred to as "pulse laser". In the ranging apparatus 20, the pulse laser is emitted with predetermined pulse width and period.

The mirror controller 24 drives the rotary mirror 251 included in the optical system 25. Specifically, the mirror controller 24 functions as a power circuit of a motor to rotate the rotary mirror 251. The rotary mirror 251 is driven (rotated) on the basis of a drive current supplied from the mirror controller 24, and reflects the incident laser light. The rotary mirror 251 is configured to be rotatable around, for example, an axis. The rotary mirror 251 may be a double-sided mirror or a polygon mirror including three or more reflection surfaces (mirror surfaces). The optical system 25 further includes an optical element according to arrangement of the laser diode 23 and/or the light sensor 26. The detailed configuration of the optical system 25 will be described later. The number of rotations can be changed on the basis of the instruction of the ranging controller 21. The rotary mirror 251 may be a biaxial MEMS (Micro Electro Mechanical Systems) mirror. The rotary mirror 251 may be a combination of a rotary mirror and a monoaxial MEMS mirror assigned to scan of part of region. The rotary mirror may be referred to as "movable mirror".

The light sensor 26 is a light receiving element sensing light made incident on the ranging apparatus 20. The light sensor 26 is disposed such that laser light emitted from the laser diode 23 and reflected by the object outside the ranging apparatus 20 is made incident thereon via the optical system 25. The light sensor 26 converts the laser light made incident on the ranging apparatus 20 into an electrical signal. Thereafter, the light sensor 26 adjusts an output level of the converted electrical signal, and outputs the electrical signal to the measurement device 27. The light sensor 26 includes, for example, a photomultiplier element, as an element converting light into an electrical signal. For example, a single-photon avalanche diode (SPAD) serving as a type of avalanche photodiodes is used as the photomultiplier element.

The measurement device 27 measures the time of detection of the laser light by the light sensor 26 on the basis of the light receiving result transmitted from the light sensor 26. For example, the measurement device 27 integrates the light receiving results for each unit time in accordance with the number of ranging points, and determines the peak part of the integrated signal as the time of detection of the laser light. In addition, the measurement device 27 calculates time of flight (ToF) of the laser light on the basis of the time of emission of the laser light by the laser diode 23 and the time of detection of the laser light reflected by the subject. Thereafter, the measurement device 27 measures (ranges) the distance between the ranging apparatus 20 and the subject on the basis of the time of flight of the laser light and the speed of the laser light. Such a ranging method is also referred to as "ToF method". The measurement device 27 outputs a ranging result to the information processing apparatus 10 for each laser light emitted by the ranging apparatus 20.

The measurement device 27 acquires the time of emission of the laser light by the laser diode 23 by, for example, notification from the ranging controller 21. The time of emission of the laser light may be measured by detection of the laser light emitted from the laser diode 23 by the light sensor in the ranging apparatus 20. The measurement device 27 may change an integration setting of light receiving results on the basis of an instruction from the ranging controller 21.

The ranging controller 21 can also change the period and timing at which the laser diode 23 emits the pulse laser, the rotational speed of the rotary mirror 251, and/or the integration setting of light receiving results by the measurement device 27, on the basis of the instruction from the information processing apparatus 10. In this manner, the ranging controller 21 can change the angle of view and the number of ranging points of the ranging apparatus 20. In other words, the ranging controller 21 can change the setting of each of the laser driver 22, the mirror controller 24, and the measurement device 27 in association on the basis of the setting of the angle of view and the number of ranging points transmitted from the information processing apparatus 10.

### (Configuration of Optical System 25)

FIG. 4 is a schematic diagram illustrating an example of a configuration of an optical system included in the ranging apparatus according to the first arrangement. FIG. 4 also illustrates the laser diode 23, the light sensor 26, and an object OB together. As illustrated in FIG. 4, the optical system 25 further includes, for example, optical elements 252, 253, and 254. Each of the optical elements 252 and 254 is, for example, a lens or a mirror. Each of the optical elements 252 and 254 may be formed of a combination of a plurality of lenses and/or a plurality of mirrors. The optical element 253 is, for example, a half mirror or a holed mirror. In the following explanation, the pulse laser emitted by the laser diode 23 is also referred to as "outgoing light LE". The pulse laser (outgoing light LE) reflected by the object OB is also referred to as "reflected light LR".

The optical element 252 guides the outgoing light LE emitted from the laser diode 23 to the optical element 253. The outgoing light LE guided by the optical element 252 is transmitted or passes through the optical element 253, and is applied to the rotary mirror 251. The rotary mirror 251 reflects the applied outgoing light LE in a direction corresponding to the incident angle of the outgoing light LE with respect to the applied surface. The reflected outgoing light LE is reflected by the object OB positioned in the traveling direction of the outgoing light LE outside the ranging apparatus 20.

The reflected light LR from the object OB is reflected by the rotary mirror 251 and applied to the optical element 253. The optical element 253 reflects the reflected light LR reflected by the rotary mirror 251 toward the optical element 254. The optical element 254 guides the reflected light LR reflected by the optical element 253 to the light sensor 26. The light sensor 26 converts the reflected light LR guided by the optical element 254 into an electrical signal, and outputs the electrical signal to the measurement device 27.

The present specification illustrates the case where the rotary mirror 251 is a polygon mirror including six reflection surfaces S1 to S6. Tilt angles of the reflection surfaces are mutually different. The ranging controller 21 controls the rotary mirror 251 such that the rotary mirror 251 rotates at fixed rotational speed based on fixed angle of view and ranging rate. The ranging apparatus 20 can scan the place to be ranged in a two-dimensional manner with the intermittently emitted outgoing light LE and the rotary mirror 251.

In the following explanation, the region that can be scanned by the ranging apparatus 20 is referred to as "scan area SA". A set of ranging results of a plurality of points corresponding to one scan is referred to as "frame". An image of a frame is generated, for example, in correspondence with one rotation of the rotary mirror 251. The ranging apparatus 20 can successively acquire distance information of a distance to the object OB positioned in front of the ranging apparatus 20 by successively executing a scan. The optical system 25 may have any other configuration as long as it can execute a scan using laser light.

### (Configuration of Scan Area SA)

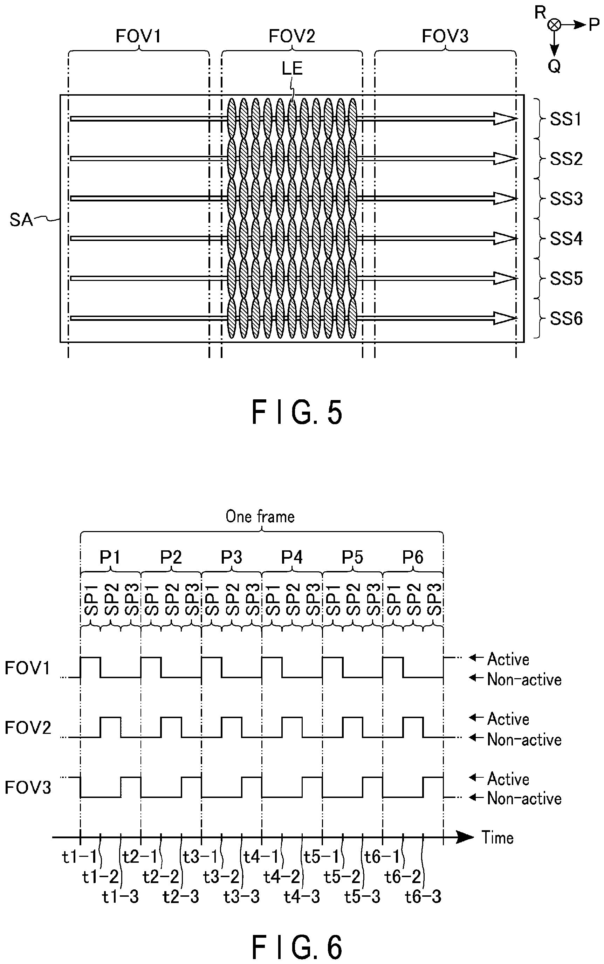

FIG. 5 is a schematic diagram illustrating an example of a configuration of a scan area SA scanned by the ranging apparatus 20 according to the first arrangement. FIG. 5 illustrates an example of an emission direction of the outgoing light LE for one frame in the scan area SA. As illustrated in FIG. 5, the outgoing light LE is applied to a PQR space. A R axis is an axis extending from the ranging apparatus 20 to the subject, and extends along, for example, the center of the emission direction of the outgoing light LE. A PQ plane is a curved surface orthogonal to the R axis and extending from the emission surface of the outgoing light LE in a concentric circle manner. A P axis and a Q axis are axes orthogonal to each other in the PQ plane. The distance data measured on the basis of each outgoing light LE is generated as, for example, a map on the PQ plane. The ranging system 1 is capable of mapping the distance data to the object existing in the space PQR in association with the FOV in the scan area SA, and recognize the distance to the object existing in the FOV.

Specifically, the ranging controller 21 achieves a scan in the P direction (lateral direction) by controlling the laser driver 22 and the mirror controller 24 and the like to intermittently emit the outgoing light LE at timings based on the set FOV. In a case of using the rotary mirror 241 including six reflection surfaces S1 to S6, the scan area SA includes first line SS1 to sixth line SS6. The scan positions of the first line SS1 to the sixth line SS6 are based on the tilt angles of the reflection surfaces S1 to S6, respectively. Specifically, the ranging apparatus 20 achieves a plurality of lines of scan shifted in the Q direction (vertical direction) by application of the outgoing light LE to different reflection surfaces by rotation of the rotary mirror 251. In addition, the ranging apparatus 20 can change the ranging direction (the position of the FOV) by adjusting the emission timing of the outgoing light LE.

FIG. 5 illustrates three types of FOV1 to FOV3. The FOV1, FOV2, and FOV3 are associated with a left part, a middle part, and a right part of the scan area SA, respectively. The present example illustrates the outgoing light LE corresponding to the FOV2. In a case of executing ranging for the FOV2, the ranging controller 21 controls the laser driver 22 and the mirror controller 24 and the like such that the outgoing light LE is intermittently emitted in the FOV2. In this manner, the ranging apparatus 20 can acquire distance information in the FOV2. In addition, the ranging apparatus 20 can selectively emit the outgoing light LE to each of the FOV1 and the FOV3 in the same manner as the FOV2, and acquire distance information of the associated FOV. The present example illustrates three types of FOVs that do not mutually overlap, but the positions of the FOVs are not limited thereto. The ranging apparatus 20 can change the positions of the FOVs to desired positions within the scan area SA.

The ranging apparatus 20 can generate a plurality of pixels (distance data) arranged in a one-dimensional manner for one outgoing light LE. The pixels arranged in a one-dimensional manner are arranged along, for example, the Q axis. The ranging apparatus 20 repeatedly executes processing of the measurement period relating to measurement associated with one outgoing light LE while shifting in a one-dimensional manner along the P axis in each of the first line SS1 to the sixth line SS6. In this manner, the ranging apparatus 20 can generate distance data in the set FOV. Such a scanning method is also referred to as "multi-channel raster scan". The outgoing light LE having an application surface having a vertically elongated shape is used as means for achieving multi-channel raster scan. The number of lines and/or the scan direction in one scan of the ranging apparatus 20 may have other settings.

### (Example of Setting of Ranging Direction of Ranging Apparatus 20)

The following is an explanation of an example of the setting of the ranging direction of the ranging apparatus 20.

In the ranging apparatus 20, for example, the rotational speed of the rotary mirror 251 is fixed. For this reason, the reflection direction of the outgoing light LE by the rotary mirror 251 can be determined on the basis of a lapse of time from the initial position of the rotary mirror 251. Accordingly, the ranging apparatus 20 can control the emission direction of the outgoing light LE on the basis of the lapse of time from the initial position of the rotary mirror 251. Specifically, the ranging apparatus 20 can control the ranging direction without minutely controlling the number of rotations of the rotary mirror 251, by controlling the emission timing of the outgoing light LE.

FIG. 6 is a timing chart illustrating an example of setting the ranging direction in the ranging apparatus 20 according to the first arrangement. FIG. 6 illustrates an example of a method of setting respective ranging directions corresponding to the FOV1 to FOV3 illustrated in FIG. 5, with the configuration of the optical system 25 illustrated in FIG. 4. The term "active (state)" in FIG. 6 indicates a state in which the ranging controller 21 supplies a pulse signal to the laser driver 22 and the laser diode 23 intermittently emits the outgoing light LE. The term "non-active (state)" in FIG. 6 indicates a state in which the ranging controller 21 supplies no pulse signal to the laser driver 22 and the laser diode 23 does not emit the outgoing light LE.

As illustrated in FIG. 6, in the present example, one frame is divided into six periods P1 to P6. The periods P1 to P6 correspond to periods in which the outgoing light LE is reflected by the respective reflection surfaces S1 to S6 of the rotary mirror 251, respectively. The period P1 includes time t1-1, time t1-2, and t1-3. The period P2 includes time t2-1, time t2-2, and t2-3. The period P3 includes time t3-1, time t3-2, and t3-3. The period P4 includes time t4-1, time t4-2, and t4-3. The period P5 includes time t5-1, time t5-2, and t5-3. The period P6 includes time t6-1, time t6-2, and t6-3. The time t1-1, the time t2-1, the time t3-1, the time t4-1, the time t5-1, and the time t6-1 correspond to the respective start times of the periods P1 to P6, respectively. The time t1-2, the time t2-2, the time t3-2, the time t4-2, the time t5-2, and the time t6-2 correspond to the respective times after first time has passed from the start times of the periods P1 to P6, respectively. The time t1-3, the time t2-3, the time t3-3, the time t4-3, the time t5-3, and the time t6-3 correspond to the respective times after second time longer than the first time has passed from the start times of the periods P1 to P6, respectively.

In the setting of ranging the FOV1, the ranging apparatus 20 changes to the active state in subsidiary periods SP1 with the times t1-1, t2-1, t3-1, t4-1, t5-1, and t6-1 serving as the respective starting points, and changes to the non-active state in the other periods. In this case, the ranging apparatus 20 can intermittently emit the outgoing light LE in the left part of the scan area SA, and range the ranging direction (FOV1) associated with the subsidiary periods SP1.

In the setting of ranging the FOV2, the ranging apparatus 20 changes to the active state in subsidiary periods SP2 with the times t1-2, t2-2, t3-2, t4-2, t5-2, and t6-2 serving as the respective starting points, and changes to the non-active state in the other periods. In this case, the ranging apparatus 20 can intermittently emit the outgoing light LE in the middle part of the scan area SA, and range the ranging direction (FOV2) associated with the subsidiary periods SP2.

In the setting of ranging the FOV3, the ranging apparatus 20 changes to the active state in subsidiary periods SP3 with the times t1-3, t2-3, t3-3, t4-3, t5-3, and t6-3 serving as the respective starting points, and changes to the non-active state in the other periods. In this case, the ranging apparatus 20 can intermittently emit the outgoing light LE in the right part of the scan area SA, and range the ranging direction (FOV3) associated with the subsidiary periods SP3.

As described above, the ranging apparatus 20 can adjust the ranging direction by controlling the timings at which the pulse signal is supplied to the laser driver 22. In a case where only the ranging direction is changed in a state in which the angle of view is fixed, the respective lengths of the subsidiary periods SP1, SP2, and SP3 are set substantially equal to each other. This is also applicable to a case where the ranging direction is set to a FOV different from the FOV1 to FOV3. In addition, if it is possible to include a noted range in the FOV, the start timings and the end timings of the subsidiary periods SP may be different between the periods P1 to P6.

### <1-1-4> Functional Configuration of Ranging System 1

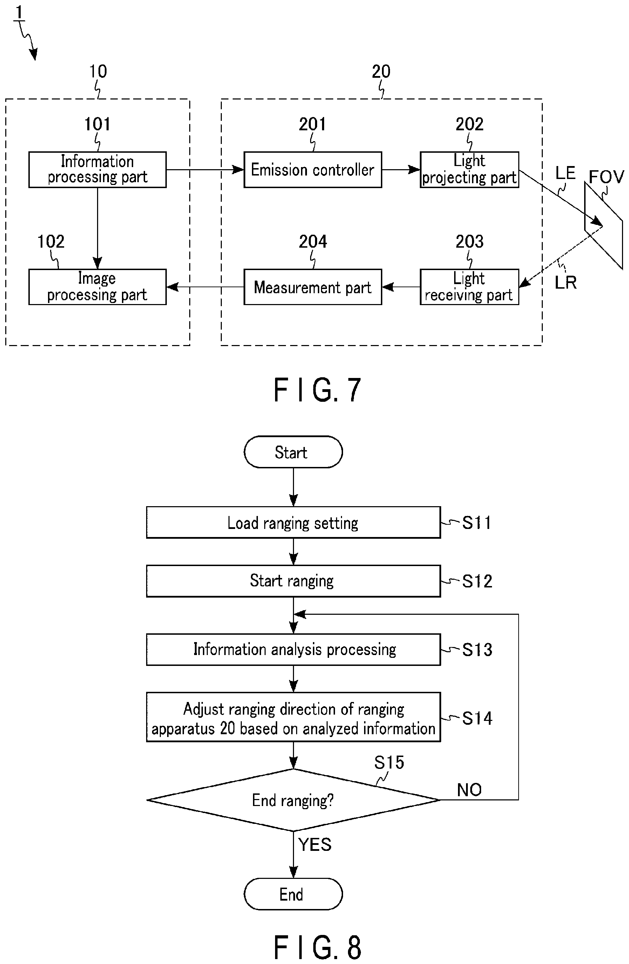

FIG. 7 is a block diagram illustrating an example of a functional configuration of the ranging system 1 according to the first arrangement. As illustrated in FIG. 7, in the ranging system 1, the information processing apparatus 10 functions as an information processing part 101 and an image processing part 102, and the ranging apparatus 20 functions as an emission controller 201, a light projecting part 202, a light receiving part 203, and a measurement part 204. The information processing part 101 is, for example, a functional block corresponding to the CPU 11, the RAM 13, and the information collecting device 17. The image processing part 102 is, for example, a functional block corresponding to the CPU 11 and the RAM 13. The emission controller 201 is, for example, a functional block corresponding to the ranging controller 21 and the laser driver 22. The light projecting part 202 is a functional block corresponding to the laser diode 23 and the optical system 25. The light receiving part 203 is a functional block corresponding to the optical system 25 and the light sensor 26. The measurement part 204 is a functional block corresponding to the measurement device 27.

The information processing part 101 determines the ranging direction (FOV) of the ranging apparatus 20 on the basis of information acquired from the sensor and the like of the information collecting device 17. The information processing part 101 transmits control parameters corresponding to the determined FOV to each of the emission controller 201 and the image processing part 102. The emission controller 201 supplies a pulse signal to the light projecting part 202 on the basis of the control parameters received from the information processing part 101. The light projecting part 202 emits the outgoing light LE in accordance with the pulse signal received from the emission controller 201. The light projecting part 202 also scans the ranging direction (FOV) determined by the information processing part 101, on the basis of control of the emission timings of the outgoing light LE by the emission controller 201.

The light receiving part 203 receives the reflected light LR reflected by the object OB in the FOV, and converts the reflected light LR into an electrical signal. The light receiving part 203 transmits the converted electrical signal (light receiving result) to the measurement part 204. The measurement part 204 generates distance data in each ranging point on the basis of the light receiving result of each outgoing light LE received from the light receiving part 203. The measurement part 204 transmits the generated distance data to the image processing part 102. The image processing part 102 generates an image for each frame using the distance data received from the measurement part 204 and information of the ranging direction received from the information processing part 101. The image generated by the image processing part 102 includes distance information between the ranging apparatus 20 and the object OB in the FOV. The image generated by the image processing part 102 is referred to by, for example, the control program of the vehicle in which the ranging system 1 is installed.

### <1-2> Operation

FIG. 8 is a flowchart illustrating an example of a ranging operation of the ranging system 1 according to the first arrangement. The following is an explanation of the ranging operation of the ranging system 1 according to the first arrangement with reference to FIG. 8.

The ranging system 1 starts a ranging operation (Start), for example, when the transportation equipment VE starts operation.

First, the ranging system 1 loads the ranging settings (S11). The ranging settings include settings, such as the angle of view, the resolution, and the ranging direction.

Next, the ranging system 1 starts ranging on the basis of the loaded ranging settings (S12). Specifically, the information processing apparatus 10 transmits the control parameters based on the ranging settings to the ranging apparatus 20. Thereafter, the ranging apparatus 20 starts ranging with the angle of view, the resolution, and the ranging direction based on the received control parameters.

Next, the ranging system 1 executes information analysis processing (S13). The information analysis processing is processing in which the information processing apparatus 10 analyzes information collected by the camera and/or the sensor of the information collecting device 17. Specific examples of the information analyzed by the information processing apparatus 10 will be explained in third to fifth arrangements.

Next, the ranging system 1 adjusts the ranging direction of the ranging apparatus 20 on the basis of the analyzed information (S14). Specifically, the information processing apparatus 10 transmits control parameters corresponding to the FOV based on the analysis results in the processing at S13 to the ranging apparatus 20. Thereafter, the ranging apparatus 20 adjusts the ranging direction on the basis of the received control parameters. The ranging apparatus 20 uses, for example, the method explained with reference to FIG. 6 to adjust the ranging direction. In the processing at S14, the information processing apparatus 10 may designate the emission timing of the outgoing light LE for the ranging apparatus 20, or designate the FOV setting based on the analysis results from preset FOV settings. In the following explanation, a set of the processing of S13 and the processing of S14 is also referred to as "ranging direction adjusting operation".

Next, the ranging system 1 checks whether a ranging operation end instruction has been received (S15). The ranging operation end instruction may be received via the user interface 15, or generated in accordance with predetermined conditions.

If no ranging operation end instruction has been received in the processing at S15 (S15: NO), the system proceeds to the processing at S13. In this manner, the processing at S13 and the processing at S14 are regularly executed, and the ranging direction is properly changed when the transportation equipment VE operates.

If a ranging operation end instruction has been received in the processing at S15 (S15: YES), the ranging system 1 ends a series of processes in FIG. 8 (End).

### <1-3> Advantageous Effect of First Arrangement

The ranging system 1 according to the first arrangement explained above enables ranging of a noted range while the resolution is maintained. The following is an explanation of details of the advantageous effect of the first arrangement.

As a method for detecting the subject positioned in front of the transportation equipment VE, a method using a monocular camera and/or a stereo camera is known. On the other hand, these cameras have problems in the detection accuracy for subjects at a long distance. By contrast, LiDARs using the ToF method are known as ranging apparatuses capable of executing long-distance ranging. A LiDAR executes ranging for each pair of emission and reception of laser light. For this reason, the number of ranging points per unit area of a LiDAR, that is, the number of ranging points of a LiDAR is smaller than that of cameras capable of acquiring an image only by light reception. A two-dimensional image acquired by a camera has, for example, 2 to 20 megapixels. By contrast, the number of pixels that can be ranged by one frame of a LiDAR is, for example, 0.1 to 0.2 megapixels or around.

As described above, a LiDAR has limitations in the number of points that can be ranged by one frame. In a case where the number of ranging points is fixed, the resolution of a LiDAR decreases as a wider angle of view is set, and increases as a narrower angle of view is set. Accordingly, a possible method for satisfying the resolution required in a LiDAR includes narrowing the angle of view, that is, emitting the outgoing light LE in a concentrated manner in a part of ranging direction (FOV) in the scan area SA. In this manner, the LiDAR can acquire ranging results of high resolution, and improve the detection accuracy for a long-distance subject. However, in a LiDAR set to a narrow angle of view, no attention may be paid to ranging in a direction that the transportation equipment VE should note.

For this reason, the ranging system 1 according to the first arrangement controls the ranging direction of the ranging apparatus 20 (LiDAR) on the basis of the information collected by the information processing apparatus 10 with the sensor or the like. Specifically, the information processing apparatus 10 determines the ranging direction (FOV) of the ranging apparatus 20 to include the subject to be noted, on the basis of the collected information. The information processing apparatus 10 notifies the ranging apparatus 20 of the setting of the determined ranging direction. The ranging apparatus 20 changes the emission timings of the outgoing light LE on the basis of the notification from the information processing apparatus 10. In this manner, the ranging apparatus 20 can change the ranging direction to a direction to be noted in movement of the transportation equipment VE, while fixing the angle of view at which the outgoing light LE is to be applied in the scan area SA.

As described above, the ranging system 1 according to the first arrangement can enhance the detection accuracy for the long-distance subject by properly setting the ranging direction and/or the resolution and the like. In addition, the ranging system 1 can secure the required ranging resolution in the ranging region required from the use case in front of the transportation equipment VE, that is, ranging of the noted range. In addition, the ranging system 1 can acquire information of the subject in a region for which a field of view cannot be secured with a camera or the like, by direction control of the ranging apparatus 20. Accordingly, the transportation equipment VE using the ranging system 1 is enabled to improve safety in moving.

### <2> Second Arrangement

A ranging system 1A according to the second arrangement changes the ranging direction of a LiDAR by using a movable mount on which the housing of the LiDAR is installed. The following is an explanation of the ranging system 1A according to the second arrangement, with respect to points thereof different from the first arrangement.

### <2-1> Configuration

### <2-1-1> Configuration of Ranging System 1A

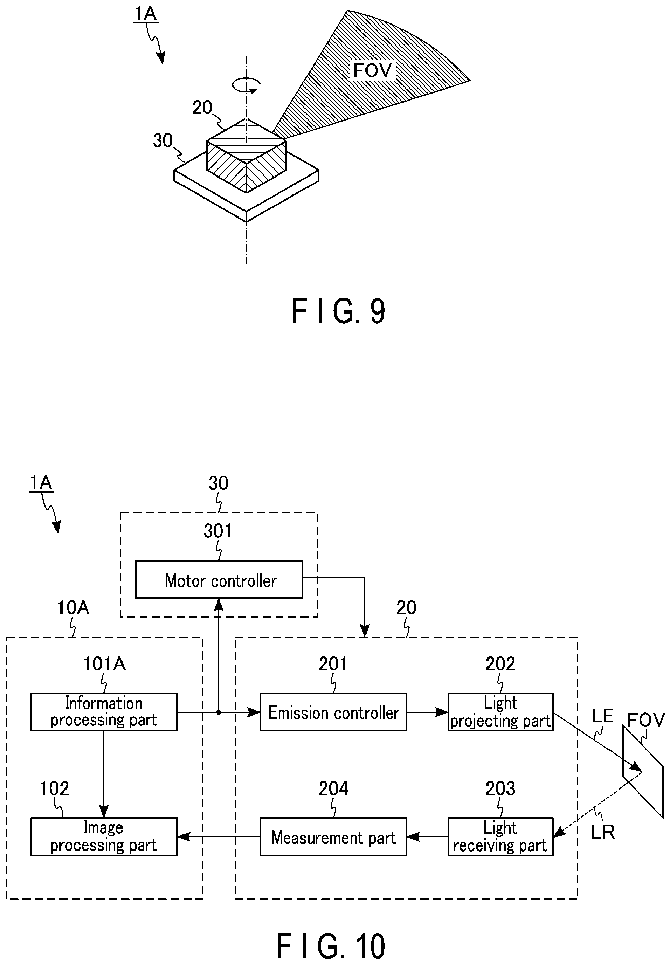

FIG. 9 is a schematic diagram illustrating an example of a configuration of the ranging system 1A according to the second arrangement. As illustrated in FIG. 9, the ranging system 1A includes, for example, an information processing apparatus 10A (not illustrated), a ranging apparatus 20, and a movable mount 30.

The information processing apparatus 10A has a configuration similar to that of the information processing apparatus 10 according to the first arrangement, and further controls the movable mount 30. The information processing apparatus 10A supplies a control signal based on information collected by the information collecting device 17 to the movable mount 30. In the ranging system 1A, the ranging apparatus 20 is installed on the movable mount 30. The movable mount 30 is a mount to be driven based on control of the information processing apparatus 10A. The movable mount 30 is, for example, configured to be rotatable around an axis. When the movable mount 30 is rotated, the ranging apparatus 20 on the movable mount 30 is also rotated. The movable mount 30 may be configured to operate in a multiaxial manner. For example, the movable mount 30 may be configured to change the direction of the ranging apparatus 20 both in the horizontal direction and in the vertical direction. The ranging apparatus 20 may have a function as the movable mount 30.

### <2-1-2> Functional Configuration of Ranging System 1A

FIG. 10 is a block diagram illustrating an example of a functional configuration of the ranging system 1A according to the second arrangement. As illustrated in FIG. 10, the information processing apparatus 10A functions as an information processing part 101A and an image processing part 102, the ranging apparatus 20 functions as an emission controller 201, a light projecting part 202, a light receiving part 203, and a measurement part 204, in the same manner as the first arrangement, and the movable mount 30 functions as a motor controller 301. The information processing part 101A is, for example, a functional block corresponding to the CPU 11, the RAM 13, and the information collecting device 17. The motor controller 301 is a functional block corresponding to the movable mount 30.

The information processing part 101A determines the ranging direction (FOV) of the ranging apparatus 20 on the basis of information acquired from the sensor and the like of the information collecting device 17, in the same manner as the information processing part 101 of the first arrangement. The information processing part 101A transmits control parameters of the ranging direction corresponding to the determined FOV to each of the motor controller 301 the emission controller 201. The motor controller 301 drives (rotates) the movable mount 30 on the basis of the control parameters received from the information processing part 101 to adjust the direction of the emission port of the ranging apparatus 20. The emission controller 201 supplies a pulse signal to the light projecting part 202 on the basis of the control parameters received from the information processing part 101A, in the same manner as the first arrangement.

The other configurations and operations of the ranging system 1A according to the second arrangement are similar to those of the ranging system 1 according to the first arrangement. The control parameters transmitted to the motor controller 301 may be different from the control parameters transmitted to the emission controller 201. It suffices that the control parameters transmitted by the information processing part 101A are optimized for each of the motor controller 301 and the emission controller 201 to enable ranging corresponding to the determined FOV. In the second arrangement, the ranging direction of the ranging apparatus 20 may be changed using only drive of the movable mount 30 without changing the ranging timings of the ranging apparatus 20.

### <2-2> Advantageous Effect of Second Arrangement

The ranging system 1A according to the second arrangement includes the movable mount 30 driven on the basis of control of the information processing apparatus 10. The movable mount 30 is configured to be capable of controlling the ranging direction of the ranging apparatus 20 on the basis of the setting of the FOV determined by the information processing apparatus 10. With this configuration, the ranging system 1A according to the second arrangement is capable of enlarging a scannable region, and adjusting the ranging direction in a wider range than that of the ranging system 1 according to the first arrangement.

### <3> Third Arrangement

A ranging system 1B according to the third arrangement is mounted on a railroad vehicle RV, and changes the ranging direction of the ranging apparatus 20 on the basis of location information of the railroad vehicle RV. The following is an explanation of the ranging system 1B according to the third arrangement, with respect to points different from the first and the second arrangements.

### <3-1> Configuration

### <3-1-1> Configuration of Ranging System 1B

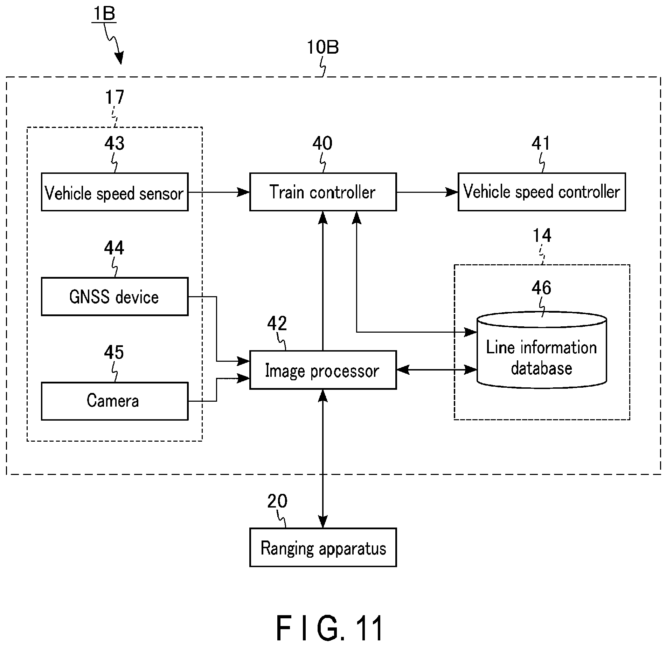

FIG. 11 is a block diagram illustrating an example of a configuration of the ranging system 1B according to the third arrangement. As illustrated in FIG. 11, the ranging system 1B includes an information processing apparatus 10B and a ranging apparatus 20. The information processing apparatus 10 has configuration acquired by adapting the information processing apparatus 10 according to the first arrangement for use as an autonomous traveling system for railroad vehicles RV. Specifically, the information processing apparatus 10B includes a train controller 40, a vehicle speed controller 41, an image processor 42, a vehicle speed sensor 43, a GNSS (Global Navigation Satellite System) device 44, a camera 45, and a line information database 46.

The train controller 40 generates a control signal relating to acceleration and deceleration of the railroad vehicle RV, on the basis of vehicle speed information acquired from the vehicle speed sensor 43, an instruction from the image processor 42, and operation information acquired from the line information database 46, and the like. The information acquired from the image processor 42 includes, for example, location information of the railroad vehicle RV. The train controller 40 transmits the generated control signal to the vehicle speed controller 41. In this manner, the train controller 40 adjusts the speed between stations and controls traveling of the railroad vehicle RV.

The vehicle speed controller 41 includes an acceleration unit and an deceleration unit to adjust the speed of the railroad vehicle RV. The vehicle speed controller 41 controls the motor connected to wheels of the railroad vehicle RV and/or brakes.

The image processor 42 generates an image, for example, on the basis of distance information from the ranging apparatus 20. In addition, the image processor 42 determines the distance from the starting point of the railroad vehicle RV by putting image information from the camera 45, ranging information from the ranging apparatus 20, location information from the GNSS device 44, and/or the line information database 46 together. The image processor 42 can specify the starting point of the railroad vehicle RV, for example, on the basis of the line information database 46. The image processor 42 instructs the train controller 40 to stop the railroad vehicle RV in a case where it is required to stop the train in accordance with the result of detection of the distance from the starting point and/or the ranging results. In addition, the image processor 42 changes the ranging direction of the ranging apparatus 20 on the basis of the collected information.

The vehicle speed sensor 43, the GNSS device 44, and the camera 45 are devices to collect information of the railroad vehicle RV itself or the surroundings. The vehicle speed sensor 43 is a sensor detecting the current speed of the railroad vehicle RV. The vehicle speed sensor 43 transmits the detected speed information to the train controller 40. The GNSS device 44 is a positioning device receiving radio waves emitted from a plurality of artificial satellites, and specifying the current location of the railroad vehicle RV on the basis of the received radio waves. The GNSS device 44 includes, for example, a receiver converting a satellite signal into digital data, a receiving antenna to receive a satellite signal, an autonomous measurement device, such as an acceleration sensor and a gyrosensor, an arithmetic processing unit calculating the current location from the satellite signal, and a storage device. The GNSS device 44 transmits the location information calculated on the basis of the satellite signal to the image processor 42. The camera 45 is an optical device capable of imaging an image around the railroad vehicle RV. The camera 45 is provided in a front part of the railroad vehicle RV. The camera 45 transmits the acquired image information to the image processor 42.

The line information database 46 retains information of the line on which the railroad vehicle RV travels and/or information relating to the operation of the railroad vehicle RV, and the like. For example, the line information database 46 includes distance information of a distance from the starting point on the line on which the railroad vehicle RV travels. Examples of the information necessary for operation of the train include information of a speed limit of the railroad vehicle RV, information of stations at which the train stops, and information of stopping positions of the stations. The information necessary for operation of the train is set in accordance with the distance information from the starting point or the location information.

The ranging apparatus 20 according to the third arrangement can change the ranging direction on the basis of an instruction from the image processor 42. The instruction as to the ranging direction from the image processor 42 to the ranging apparatus 20 include information relating to the position for the target to be noted or the ranging direction. The ranging apparatus 20 acquires ranging information of the subject, such as an obstacle existing in front of the railroad vehicle RV, in a two-dimensional manner on the basis of the FOV designated by the image processor 42, and transmits the acquired ranging information to the image processor 42. The instruction from the image processor 42 is based on, for example, distance information of the distance to the station to stop at and/or information of a sign position serving as a criterion of the stopping position, and the like. The distance information of the distance to the station to stop at is acquired from, for example, the operation information acquired from the line information database 46 and by the GNSS device 44.

In the information processing apparatus 10B, each of the train controller 40 and the image processor 42 corresponds to, for example, the CPU 11, the ROM 12, and the RAM 13 of the information processing apparatus 10 according to the first arrangement. Specifically, the train controller 40 and the image processor 42 are, for example, computers configured to be capable of communicating with each other. The line information database 46 is stored in the storage device 14 or the like. The vehicle speed sensor 43, the GNSS device 44, and the camera 45 correspond to the information collecting device 17. The devices in the information processing apparatus 10B may be connected via a network cable, such as Ethernet (registered trademark). In the present specification, the term "obstacle" means, for example, an object obstructing train operations.

### <3-1-2> Functional Configuration of Ranging System 1B

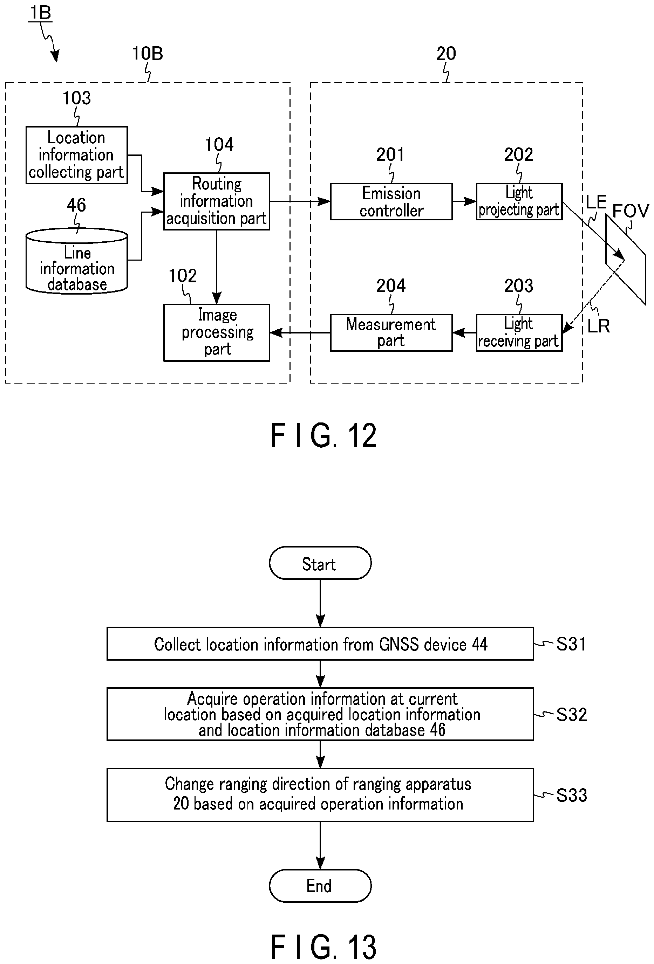

FIG. 12 is a block diagram illustrating an example of a functional configuration of the ranging system 1B according to the third arrangement. As illustrated in FIG. 12, in the ranging system 1B, the information processing apparatus 10B functions as a location information collecting part 103, a routing information acquisition part 104, the line information database 46, and an image processing part 102, and the ranging apparatus 20 functions as an emission controller 201, a light projecting part 202, a light receiving part 203, and a measurement part 204, in the same manner as the first arrangement. The location information collecting part 103 is a functional block corresponding to the GNSS device 44 and the image processor 42. The routing information acquisition part 104 is a functional block corresponding to the image processor 42.

The location information collecting part 103 collects location information of the railroad vehicle RV on the basis of the measurement results of the GNSS device 44. To collect the location information, the location information collecting part 103 uses, for example, a position measuring arithmetic processing algorithm including satellite positioning signal processing, autonomous measurement data arithmetic processing, and time arithmetic processing. The location information collecting part 103 transmits the collected location information to the routing information acquisition part 104.

The routing information acquisition part 104 acquires operation information in the vicinity of the current location of the railroad vehicle RV from the line information database 46 on the basis of the location information received from the location information collecting part 103. The routing information acquisition part 104 determines the ranging direction (FOV) of the ranging apparatus 20 on the basis of the acquired operation information. Thereafter, the routing information acquisition part 104 transmits control parameters corresponding to the determined FOV to each of the emission controller 201 and the image processing part 102. In a case where the line information database 46 includes information associating the location information with the ranging direction, the routing information acquisition part 104 may acquire the ranging direction at the current location with reference to the line information database 46 using the location information.

The emission controller 201 according to the third arrangement supplies a pulse signal to the light projecting part 202 on the basis of the control parameters received from the routing information acquisition part 104. Hereinafter, the light projecting part 202 emits pulse laser (outgoing light LE) in accordance with the pulse signal received from the emission controller 201, in the same manner as the first arrangement. The light receiving part 203 receives the reflected light LR reflected from the object OB in the FOV and converts the reflected light LR into an electrical signal. The measurement part 204 transmits the electrical signal (light receiving results) received from the light receiving part 203 to the image processing part 102. The image processing part 102 generates an image for each frame using the distance data received from the measurement part 204 and the information of the ranging direction received from the routing information acquisition part 104. The other configurations of the ranging system 1B according to the third arrangement are the same as those of the ranging system 1 according to the first arrangement.

### <3-2> Operation

FIG. 13 is a flowchart illustrating an example of a ranging direction adjusting operation of the ranging system 1B according to the third arrangement. The following is an explanation of the ranging direction adjusting operation of the ranging system 1B according to the third arrangement.

When a ranging direction adjusting operation is started (Start), the information processing apparatus 10B collects location information from the GNSS device 44 (S31) .

Next, the information processing apparatus 10B acquires operation information at the current location on the basis of the acquired location information and the line information database 46 (S32).

Next, the information processing apparatus 10B changes the ranging direction of the ranging apparatus 20 on the basis of the acquired operation information (S33).

When the processing at S33 is finished, the ranging system 1B ends a series of processes in FIG. 13, that is, one ranging direction adjusting operation (End). The other operations of the ranging system 1B according to the third arrangement are the same as those of the ranging system 1 according to the first arrangement.

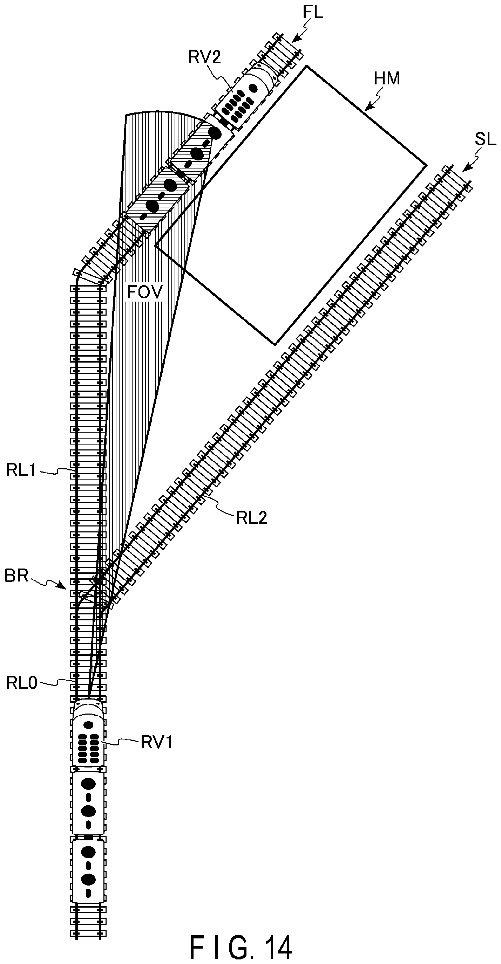

FIG. 14 is a schematic diagram illustrating an example of adjustment of the ranging direction with the ranging system 1B according to the third arrangement. As illustrated in FIG. 14, in the present example, a railroad vehicle RV1 is located on a line RL0. The line RL0 is divided into two lines RL1 and RL2 via a branch part BR. A platform HM for railroad vehicles RV is located between the lines RL1 and RL2. For example, parts of the lines RL1 and RL2 adjacent to the platform HM correspond to a first track FL and a second track SL, respectively. In the present example, a railroad vehicle RV2 is stopped at the first track FL.

In the present example, the railroad vehicle RV1 is scheduled to stop at the first track FL. When the railroad vehicle RV1 detects that it has moved to the position of the line RL0, the railroad vehicle RV1 acquires operation information based on the position of the line RL0, and determines the ranging direction (direction of FOV). In this case, the railroad vehicle RV1 sets the ranging direction to a ranging direction toward the first track FL from a position on the line RL0. In this manner, the railroad vehicle RV1 can check presence/absence of any railroad vehicle RV stopped in the traveling direction thereof and/or presence/absence of an obstacle. It suffices that the ranging system 1B according to the third arrangement determines the ranging direction at the current location at least on the basis of the location information of the railroad vehicle RV and the line information database 46.

### <3-3> Advantageous Effect of Third Arrangement

A method using a monocular camera and/or a stereo camera is known as a method for detecting an obstacle existing ahead of the railroad vehicle. However, these cameras have problems in the detection accuracy for subjects at a long distance, as described in the first arrangement. In addition, the detection accuracy for subjects by cameras tends to deteriorate in a case of insufficient quantity of light. Imaging with a camera can be assisted by illumination ahead of the railroad vehicle RV, but a region that cannot be followed by illumination may occur.

By contrast, in the ranging system 1B according to the third arrangement, the railroad vehicle RV includes the ranging apparatus 20. As described in the first arrangement, the ranging apparatus 20 can detect an obstacle at a long distance with higher accuracy than that of cameras, with the narrower angle of view. In addition, The ranging system 1B according to the third arrangement controls the ranging direction of the ranging apparatus 20 with reference to the line information database 46 in accordance with the current location of the traveling railroad vehicle RV. The GNSS device 44 can execute measurement regardless of the quantity of light of the surroundings. Specifically, the ranging system 1B can set a ranging direction based on the operation information in the ranging apparatus 20, regardless of the quantity of light of the surroundings.

Consequently, the ranging system 1B according to the third arrangement can change the ranging direction to a direction to be noted, while achieving setting of the angle of view (FOV) of the ranging apparatus 20 with the required resolution, in the same manner as the first arrangement. In other words, the ranging system 1B can secure the required ranging resolution in ranging of the ranging region required from the use case in front of the railroad vehicle RV, that is, ranging of the noted range. In addition, the ranging system 1B can acquire information of the subject in a region for which a field of view cannot be secured with a camera or illumination, by direction control of the ranging apparatus 20. Accordingly, the railroad vehicle RV using the ranging system 1B is enabled to improve safety in traveling.

### <4> Fourth Arrangement

A ranging system 1C according to the fourth arrangement is mounted on a railroad vehicle RV, and changes the ranging direction of the ranging apparatus 20 on the basis of the shape of the line in the traveling direction of the railroad vehicle RV. The following is an explanation of the ranging system 1C according to the fourth arrangement with respect to points different from the first to the third arrangements.

### <4-1> Configuration

The ranging system 1C according to the fourth arrangement includes an information processing apparatus 10C and a ranging apparatus 20. The hardware configuration of the information processing apparatus 10C is the same as, for example, that of the information processing apparatus 10B according to the third arrangement.

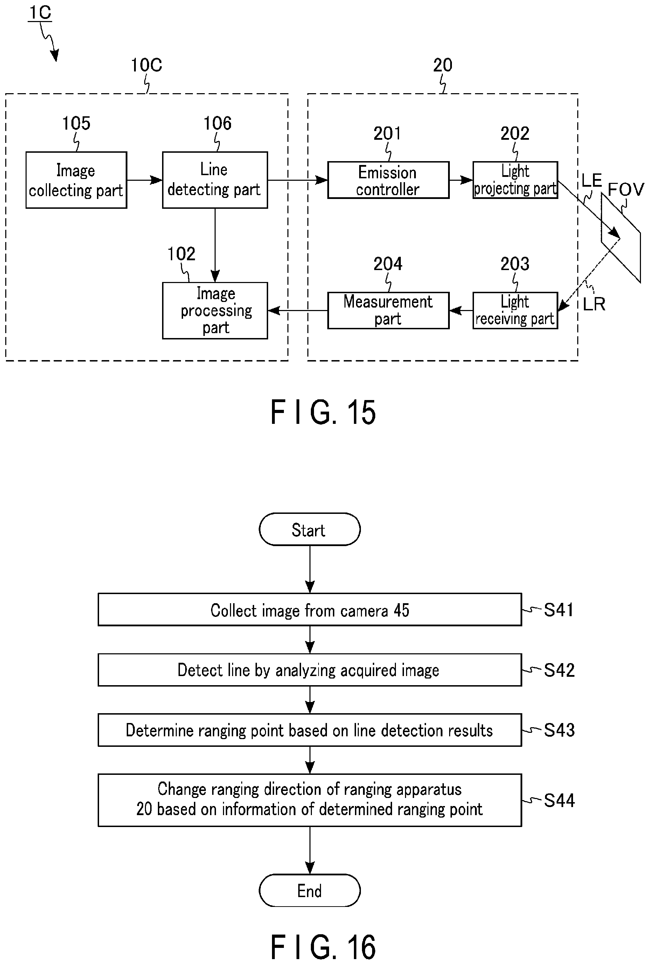

FIG. 15 is a block diagram illustrating an example of a functional configuration of the ranging system 1C according to the fourth arrangement. As illustrated in FIG. 15, in the ranging system 1C, the information processing apparatus 10C functions as an image collecting part 105, a line detecting part 106, and an image processing part 102, and the ranging apparatus 20 of the ranging system 1C functions as an emission controller 201, a light projecting part 202, a light receiving part 203, and a measurement part 204, in the same manner as the first arrangement. The image collecting part 105 is a functional block corresponding to a camera 45 and an image processor 42. The line detecting part 106 is a functional block corresponding to the image processor 42.

The image collecting part 105 collects an image taken by the camera 45. Thereafter, the image collecting part 105 transmits the collected image to the line detecting part 106. The line detecting part 106 detects a line from the image received from the image collecting part 105. Specifically, the line detecting part 106 detects the line ahead of the railroad vehicle RV, and determines a region on which the railroad vehicle RV travels on the line. Thereafter, the line detecting part 106 determines the ranging direction (FOV) of the ranging apparatus 20 on the basis of the acquired line information. For example, the line detecting part 106 calculates the distance in the traveling direction on the basis of the track of the detected line, and determines the ranging direction to include a point corresponding to a train forward distance designated separately. The train forward distance is a distance ahead of the railroad vehicle RV along the line. The train forward distance may be preset or acquired from the line information database 46. Thereafter, the line detecting part 106 transmits control parameters corresponding to the determined FOV to each of the emission controller 201 and the image processing part 102.

The emission controller 201 according to the fourth arrangement supplies a pulse signal to the light projecting part 202 on the basis of the control parameters received from the line detecting part 106. Hereinafter, in the same manner as the third arrangement, the light projecting part 202 emits pulse laser (outgoing light LE) in accordance with the pulse signal received from the emission controller 201. The light receiving part 203 receives reflected light LR reflected from the object OB in the FOV and converts the reflected light LR into an electrical signal. The measurement part 204 transmits the electrical signal (light receiving results) received from the light receiving part 203 to the image processing part 102. The image processing part 102 generates an image for each frame using the distance data received from the measurement part 204 and the information of the ranging direction received from the line detecting part 106. The other configurations of the ranging system 1C according to the fourth arrangement are the same as those of the ranging system 1B according to the third arrangement.

The line detecting part 106 detects a line on the basis of a feature quantity serving as a yardstick indicating line likelihood based on the predetermined criterion. The line detecting part 106 may use information, such as detected line information, line width information, and branch information, to detect a line. A specific method for detecting a line is disclosed in, for example, the specification of Japanese Patent Application Publication No. 2018-119125 "Rail Track Detection Device" filed on June 22, 2018. The whole patent application is cited by reference in the specification of the present application.

### <4-2> Operation

FIG. 16 is a flowchart illustrating an example of a ranging direction adjusting operation of the ranging system 1C according to the fourth arrangement. The following is an explanation of the ranging direction adjusting operation of the ranging system 1C according to the fourth arrangement with reference to FIG. 16.

When a ranging direction adjusting operation is started (Start), the information processing apparatus 10C collects an image from the camera 45 (S41).

Next, the information processing apparatus 10C detects a line by analyzing the acquired image (S42).

Next, the information processing apparatus 10C determines a ranging point of the railroad vehicle RV on the basis of line detection results (S43). The ranging point determined by the processing at S43 is based on a predetermined train forward distance.

Next, the information processing apparatus 10C changes the ranging direction of the ranging apparatus 20 on the basis of information of the determined ranging point (S44).

When the processing at S44 is finished, the ranging system 1C ends a series of processes in FIG. 16, that is, the ranging direction adjusting operation in the fourth arrangement (End). The other operations of the ranging system 1C according to the fourth arrangement are the same as those of the ranging system 1 according to the first arrangement.

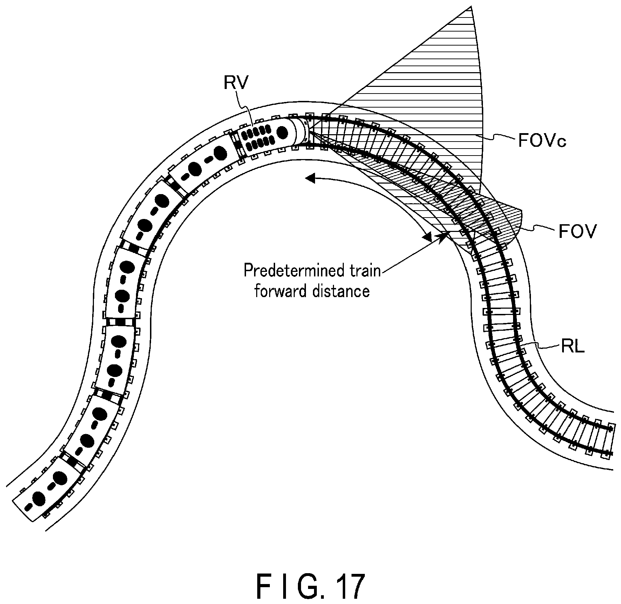

FIG. 17 is a schematic diagram illustrating an example of adjustment of the ranging direction with the ranging system 1C according to the fourth arrangement. As illustrated in FIG. 17, in the present example, a railroad vehicle RV is located on a meandering line RL. In addition, the angle of view of the camera 45 provided in the front part of the railroad vehicle RV is indicated as "FOVc". The FOVc of the camera 45 is set broader than the FOV of the ranging apparatus 20.

In the present example, the railroad vehicle RV is traveling on a rightward curved part of the line RL. The railroad vehicle RV detects the rightward curved line RL on the basis of an image from the camera 45, and calculates the train forward distance along the line RL. Thereafter, the railroad vehicle RV sets the ranging direction to a direction including the predetermined train forward distance. In this manner, the railroad vehicle RV is enabled to check presence/absence of an obstacle on the line in the traveling direction and the like.

### <4-3> Advantageous Effect of Fourth Arrangement

The ranging system 1C according to the fourth arrangement can change the ranging direction to a direction to be noted, while achieving setting of the angle of view (FOV) of the ranging apparatus 20 with the required resolution, in the same manner as the first arrangement. In addition, the ranging system 1C according to the fourth arrangement can early find an obstacle existing in the traveling direction, because the FOV is set with the predetermined train forward distance. Accordingly, the railroad vehicle RV using the ranging system 1C is enabled to improve safety in traveling.

### <5> Fifth Arrangement

A ranging system 1D according to the fifth arrangement is mounted on a railroad vehicle RV, and changes the ranging direction of the ranging apparatus 20 in accordance with the object detected around the railroad vehicle RV. The following is an explanation of the ranging system 1D according to the fifth arrangement with respect to points different from the first to the fourth arrangements.

### <5-1> Configuration

The ranging system 1D according to the fifth arrangement includes an information processing apparatus 10D and a ranging apparatus 20. The hardware configuration of the information processing apparatus 10D is the same as that of the information processing apparatus 10B according to the third arrangement.

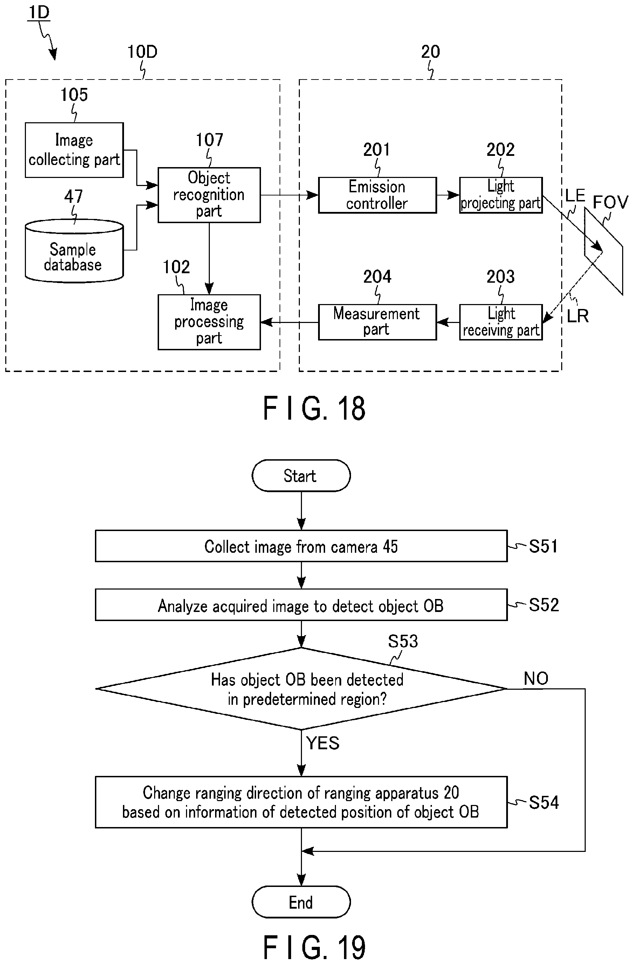

FIG. 18 is a block diagram an example of a functional configuration of the ranging system 1D according to the fifth arrangement. As illustrated in FIG. 18, the information processing apparatus 10D of the ranging system 1D functions as an image collecting part 105, an object recognition part 107, a sample database (sample DB) 47, and an image processing part 102. The ranging apparatus 20 of the ranging system 1C functions as an emission controller 201, a light projecting part 202, a light receiving part 203, and a measurement part 204, in the same manner as the first arrangement. The object recognition part 107 is a functional block corresponding to the image processor 42. The sample database 47 is stored in, for example, the storage device 14.

The image collecting part 105 collects an image taken by the camera 45, in the same manner as the fourth arrangement. The image collecting part 105 transmits the collected image to the line detecting part 106. The object recognition part 107 detects an object from the image received from the image collecting part 105. The object recognition part 107 refers to, for example, the same database 47 to detect an object. The sample database 47 includes a library relating obstructions in traveling of the railroad vehicles RV. Examples of information of obstructions recorded on the sample database 47 include shapes of obstacles that may exist in the line, such as people, animals, fallen trees, and vehicles. The library of the sample database 47 include information relating to shapes and the like of these obstacles. The object recognition part 107 checks the image received from the image collecting part 105 against the library of obstacles of the sample database 47, and calculates an image position of a region having high similarity. The object recognition part 107 determines a region having high similarity as a region in which an obstacle exists. Thereafter, the object recognition part 107 determines the ranging direction (FOV) of the ranging apparatus 20 to a direction of a point determined as a point at which an obstacle exists in a three-dimensional manner. Thereafter, the object recognition part 107 transmits control parameters corresponding to the determined FOV to each of the emission controller 201 and the image processing part 102.

The object recognition part 107 may detect a line ahead of the railroad vehicle RV on the basis of the algorithm as explained in the fourth arrangement. The object recognition part 107 may set the FOV in accordance with position relation between the detected line and the object. The other configurations of the ranging system 1D according to the fifth arrangement are the same as those of the ranging system 1B according to the third arrangement.

### <5-2> Operation

FIG. 19 is a flowchart illustrating an example of a ranging direction adjusting operation of the ranging system 1D according to the fifth arrangement. The following is an explanation of the ranging direction adjusting operation of the ranging system 1D according to the fifth arrangement.

When a ranging direction adjusting operation is started (Start), the information processing apparatus 10D collects an image from the camera 45 (S51).

Next, the information processing apparatus 10D analyzes the acquired image and detects an object OB (S52). In the processing at S52, the information processing apparatus 10D may further detect a line.

Next, the information processing apparatus 10D checks whether the object OB has been detected in a predetermined region (S53). The predetermined region is, for example, a region on the line RL. The configuration is not limited thereto, but the predetermined region may include a region in the vicinity of the line RL.

If the object OB is not detected in the predetermined region (S53: NO), the ranging system 1D ends a series of processes in FIG. 19, that is, the ranging direction adjusting operation in the fifth arrangement (End).

If the object OB is detected in the predetermined region (S53: YES), the ranging system 1D changes the ranging direction of the ranging apparatus 20 on the basis of information of the detected position of the object OB (S54).

When the processing at S54 is finished, the ranging system 1C ends a series of processes in FIG. 19, that is, the ranging direction adjusting operation in the fifth arrangement (End). The other operations of the ranging system 1C according to the fifth arrangement are the same as those of the ranging system 1 according to the first arrangement.

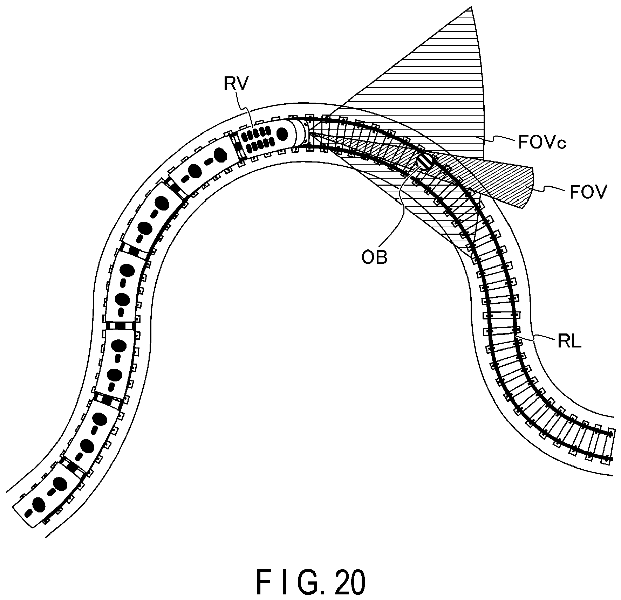

FIG. 20 is a schematic diagram illustrating an example of adjustment of the ranging direction with the ranging system 1D according to the fifth arrangement. As illustrated in FIG. 20, in the present example, a railroad vehicle RV is located on a meandering line RL. In addition, the angle of view of the camera 45 provided in the front part of the railroad vehicle RV is indicated as "FOVc". The FOVc of the camera 45 is set broader than the FOV of the ranging apparatus 20.

In the present example, the railroad vehicle RV is traveling on a rightward curved part of the line RL. The railroad vehicle RV detects an object OB on the rightward curved line RL on the basis of an image from the camera 45. In this case, the railroad vehicle RV sets the ranging direction to a direction including the object OB. In this manner, the railroad vehicle RV is enabled to accurately acquire a distance to the obstacle on the line.

### <5-3> Advantageous Effect of Fifth Arrangement

The ranging system 1D according to the fifth arrangement can change the ranging direction to a direction to be noted, while achieving setting of the angle of view (FOV) of the ranging apparatus 20 with the required resolution, in the same manner as the first arrangement. In addition, the ranging system 1D according to the fifth arrangement can accurately calculate a distance to an obstacle (object OB) in the predetermined region. This configuration enables the ranging system 1D according to the fifth arrangement to more accurately determine a risk in traveling and controls vehicle speed based on the risk in traveling. Accordingly, the railroad vehicle RV using the ranging system 1D is enabled to improve safety in traveling.

### <6> Sixth Arrangement

A ranging system 1E according to the sixth arrangement is mounted on a railroad vehicle RV, and uses the methods for changing the ranging direction explained in the third to the fifth arrangements properly. The following is an explanation of the ranging system 1E according to the sixth arrangement with respect to points different from the first to the fifth arrangements.

### <6-1> Configuration

The ranging system 1E according to the sixth arrangement includes an information processing apparatus 10E including respective functions of the information processing apparatuses 10B, 10C, and 10D and a ranging apparatus 20. The hardware configuration of the information processing apparatus 10E is the same as that of the information processing apparatus 10B according to the third arrangement. In the information processing apparatus 10E, the RAM 13 stores setting information. The setting information includes information relating to the setting of the ranging direction adjusting operation. The setting information may be stored in the storage device 14, or stored in an external device connected to the ranging system 1 in a wired or wireless manner.

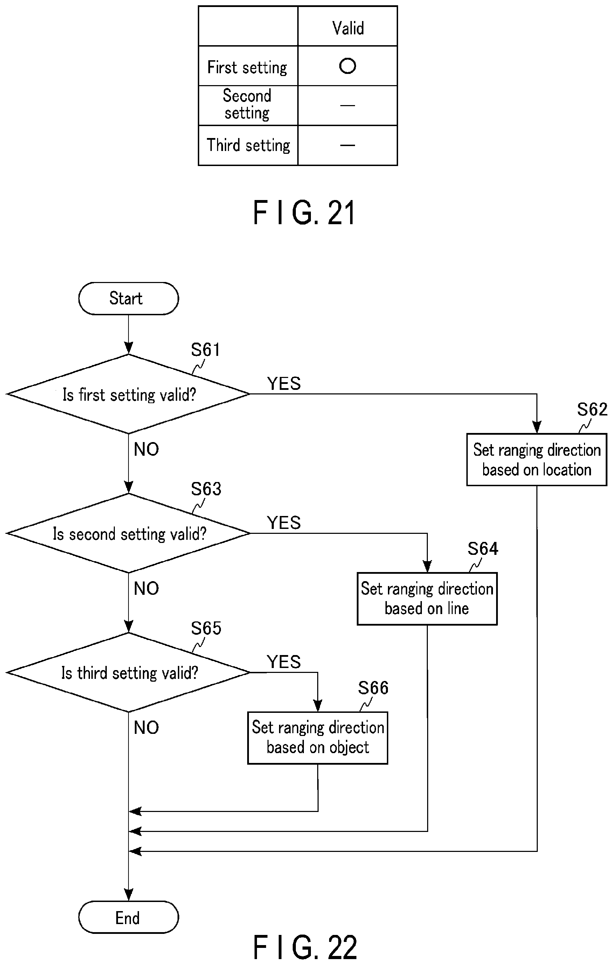

FIG. 21 is a table illustrating an example of the setting information stored in the information processing apparatus 10E according to a sixth arrangement. As illustrated in FIG. 21, the setting information includes information indicating whether each of a first setting, a second setting, and a third setting is valid. The first setting is associated with the method for adjusting the ranging direction based on the location information of the railroad vehicle RV described in the third arrangement. The second setting is associated with the method for adjusting the ranging direction based on the shape of the line described in the fourth arrangement. The third setting is associated with the method for adjusting the ranging direction based on the detection results of a specific object described in the fifth arrangement.

In the information processing apparatus 10E according to the sixth arrangement, one of the first setting, the second setting, and the third setting can be set to valid ("0"). In the information processing apparatus 10E, in a case where the methods for adjusting the ranging direction described in the third to the fifth arrangements are not used, each of the first setting, the second setting, and the third setting is set to invalid ("-"). The other structures of the ranging system 1E according to the sixth arrangement are the same as those in the ranging system 1B according to the third arrangement.

### <6-2> Operation

FIG. 22 is a flowchart illustrating an example of a ranging direction adjusting operation of the ranging system 1E according to the sixth arrangement. The following is an explanation of the ranging direction adjusting operation of the ranging system 1E.

When a ranging operation is started, the ranging system 1E regularly executes a series of processes in FIG. 22 (Start).

First, the ranging system 1E checks whether the first setting is valid, with reference to the setting information stored in the RAM 13 (S61).

If it is checked in the processing at S61 that the first setting is valid (S61: YES), the ranging system 1E executes ranging direction setting based on the location, that is, the ranging direction adjusting operation described in the third arrangement (S62). When the processing at S62 is finished, the ranging system 1E ends a series of processes in FIG. 22 (End).

If it is checked in the processing at S61 that the first setting is not valid (S61: NO), the ranging system 1E checks whether the second setting is valid, with reference to the setting information stored in the RAM 13 (S63).

If it is checked in the processing at S63 that the second setting is valid (S63: YES), the ranging system 1E executes ranging direction setting based on the line, that is, the ranging direction adjusting operation described in the fourth arrangement (S64). When the processing at S64 is finished, the ranging system 1E ends a series of processes in FIG. 22 (End).

If it is checked in the processing at S63 that the second setting is not valid (S63: NO), the ranging system 1E checks whether the third setting is valid, with reference to the setting information stored in the RAM 13 (S65) .

If it is checked in the processing at S65 that the third setting is valid (S65: YES), the ranging system 1E executes ranging direction setting based on the object, that is, the ranging direction adjusting operation described in the fifth arrangement (S66). When the processing at S66 is finished, the ranging system 1E ends a series of processes in FIG. 22 (End).

If it is checked in the processing at S65 that the third setting is not valid (S65: NO), the ranging system 1E maintains the current ranging direction setting, and ends a series of processes in FIG. 22 (End).

### <6-3> Advantageous Effect of Sixth Arrangement

As described above, the ranging system 1E according to the sixth arrangement is configured to use the ranging direction adjusting operations described in the third to the fifth arrangements properly according to the user's request. This structure enables the ranging system 1E to adjust the ranging direction using the method more suitable to the use environment of the railroad vehicle RV.

### <7> Others

The arrangements described above may be used in combination in a possible range. For example, the second arrangement may be combined with any of the third to the sixth arrangements. The third to the sixth arrangements illustrate a case where the transportation equipment VE is a railroad vehicle RV, but the structure is not limited thereto. The third to the sixth arrangements are applicable to transportation equipment VE using elements indicating routes in the same manner as the line. For example, the third to the sixth arrangements are also applicable to fixed-route buses.

As long as the operations described in the above arrangements can be achieved, part of functions of the information processing apparatus 10 may be installed in the ranging apparatus 20. For example, the ranging apparatus 20 may achieve each of the functions of the information processing parts 101 and 101A, the routing information acquisition part 104, the line detecting part 106, and the object recognition part 107. In the ranging direction adjusting operation, the processing of determining the ranging direction (FOV) may be executed by the ranging controller 21 of the ranging apparatus 20. In this case, information acquired by each of sensors of the information collecting device 17 is transmitted to the ranging controller 21. Part of functions of the ranging controller 21 may be provided in the light sensor 26 and/or the measurement device 27. In this manner, the ranging apparatus 20 can timely execute minute operations. Classification of the structures explained in the arrangements may be other classifications as long as the operations described in the arrangements can be achieved. The ranging direction adjusting operation may be achieved by an embedded computer including a CPU, a memory, a bus, and an input/output circuit (I/O).

The CPU included in the ranging system 1 may be another circuit. For example, a MPU (Micro Processing Unit) or the like may be used instead of the CPU. Each of processes described in the arrangements may be achieved by dedicated hardware. In each of the arrangements, the processing executed by software and the processing executed by hardware may exist in a mixed manner, or only one of them may exist. The ranging controller 21 and/or the CPU may also be referred to as "control circuit" and/or "processor". The measurement device 27 may also be referred to as "measurement circuit". The image processor 42 may also be referred to as "image processing circuit". The laser diode 23 may also be referred to as "light source". The term "train forward distance" may be rephrased according to the type of the transportation equipment VE. The element "line" may also be referred to as "traveling route".

The arrangements described above illustrate the case where the ranging apparatus 20 executes multi-channel raster scan, but other scanning methods may be used. For example, the ranging apparatus 20 may use "raster scan", "multi-channel scan", and/or "OPA method (Optical Phased Array)", as other scanning methods. Specifically, it suffices that the ranging apparatus 20 can adjust the ranging direction (position of FOV) by, for example, adjusting the emission timings of the pulse laser, in a case of using either a mechanical method or the OPA method is used as the scanning method.

Clause 1. A ranging apparatus comprising:
a light source (23);
a movable mirror (251) configured to reflect each of first laser light (LE) and second laser light (LR), the first laser light emitted from the light source, the second laser light corresponding to the first laser light reflected by an external subject;
a light sensor (26) configured to detect the second laser light reflected by the movable mirror;
a measurement circuit (27) configured to measure a distance to the subject based on a timing of emission of the first laser light by the light source and a timing of detection of the second laser light by the light sensor; and
a first control circuit (21) configured to change an emission direction of the first laser light based on a first signal from outside.

Clause 2. The ranging apparatus of clause 1, wherein the first control circuit changes the emission direction of the first laser light by changing timings at which the light source intermittently emits the first laser light while the movable mirror rotating at constant speed makes one rotation.

Clause 3. A ranging system mounted on transportation equipment, the ranging system comprising:
the ranging apparatus of clause 1;
an information collecting device configured to collect information; and
a second control circuit configured to generate the first signal based on the information.

Clause 4. The ranging system of clause 3, wherein
the information collecting device includes a GNSS (Global Navigation Satellite System) device, and
the GNSS device configured to calculate a current location of the transportation equipment based on a satellite signal, and output the current location as part of the information.

Clause 5. The ranging system of clause 4, further comprising:
a storage device configured to store a first database including information of ranging directions associated with location information of a traveling route of the transportation equipment, wherein
the second control circuit refers to the first database using information of the current location of the transportation equipment received from the GNSS device, and generates the first signal including control parameters to emit the first laser light by the light source in a ranging direction associated with the current location.

Clause 6. The ranging system of clause 3, wherein
the information collecting device includes a camera, and
the camera outputs a taken image as part of the information.

Clause 7. The ranging system of clause 6, wherein
the second control circuit detects a traveling route of the transportation equipment from the image, and generates the first signal based on the detected traveling route.

Clause 8. The ranging system of clause 7, wherein the second control circuit generates the first signal including control parameters to emit the first laser light by the light source in a direction including a part having a distance from the transportation equipment being a first distance.

Clause 9. The ranging system of clause 8, wherein the first distance is a distance along the traveling route.

Clause 10. The ranging system of clause 6, wherein the second control circuit detects an obstacle from the image, and generates the first signal including control parameters enabling the light source to emit the first laser light to a position of the obstacle.

Clause 11. The ranging system of clause 10, further comprising:
a storage device configured to store a second database including information of respective shapes of a plurality of obstructions corresponding to the obstacles, wherein
the second control circuit determines a part having high similarity to information of the respective shapes of the obstructions in the image, as a part in which the obstacle exists.

Clause 12. The ranging system of clause 10, wherein
the second control circuit detects a traveling route of the transportation equipment from the image, and generates the first signal including control parameters enabling the light source to emit the first laser light in a direction including the position of the obstacle, in a case where the obstacle is positioned on the traveling route.

Clause 13. The ranging system of clause 3, further comprising:
a movable mount on which the ranging system is installed, wherein
the second control circuit changes an emission direction of the first laser light by controlling the movable mount based on the information.

Clause 14. The ranging system of any one of clauses 3 to 13, wherein the transportation equipment is a railroad vehicle.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

## Claims

1. A ranging apparatus comprising:
a light source (23);
a movable mirror (251) configured to reflect each of first laser light (LE) and second laser light (LR), the first laser light emitted from the light source, the second laser light corresponding to the first laser light reflected by an external subject;
a light sensor (26) configured to detect the second laser light reflected by the movable mirror;
a measurement circuit (27) configured to measure a distance to the subject based on a timing of emission of the first laser light by the light source and a timing of detection of the second laser light by the light sensor; and
a first control circuit (21) configured to change an emission direction of the first laser light based on a first signal from outside.

2. The ranging apparatus of claim 1, wherein the first control circuit changes the emission direction of the first laser light by changing timings at which the light source intermittently emits the first laser light while the movable mirror rotating at constant speed makes one rotation.

3. A ranging system mounted on transportation equipment, the ranging system comprising:
the ranging apparatus of claim 1;
an information collecting device configured to collect information; and
a second control circuit configured to generate the first signal based on the information.

4. The ranging system of claim 3, wherein
the information collecting device includes a GNSS (Global Navigation Satellite System) device, and
the GNSS device configured to calculate a current location of the transportation equipment based on a satellite signal, and output the current location as part of the information.

5. The ranging system of claim 4, further comprising:
a storage device configured to store a first database including information of ranging directions associated with location information of a traveling route of the transportation equipment, wherein
the second control circuit refers to the first database using information of the current location of the transportation equipment received from the GNSS device, and generates the first signal including control parameters to emit the first laser light by the light source in a ranging direction associated with the current location.

6. The ranging system of claim 3, wherein
the information collecting device includes a camera, and
the camera outputs a taken image as part of the information.

7. The ranging system of claim 6, wherein
the second control circuit detects a traveling route of the transportation equipment from the image, and generates the first signal based on the detected traveling route.

8. The ranging system of claim 7, wherein the second control circuit generates the first signal including control parameters to emit the first laser light by the light source in a direction including a part having a distance from the transportation equipment being a first distance.

9. The ranging system of claim 8, wherein the first distance is a distance along the traveling route.

10. The ranging system of claim 6, wherein the second control circuit detects an obstacle from the image, and generates the first signal including control parameters enabling the light source to emit the first laser light to a position of the obstacle.

11. The ranging system of claim 10, further comprising:
a storage device configured to store a second database including information of respective shapes of a plurality of obstructions corresponding to the obstacles, wherein
the second control circuit determines a part having high similarity to information of the respective shapes of the obstructions in the image, as a part in which the obstacle exists.

12. The ranging system of claim 10, wherein
the second control circuit detects a traveling route of the transportation equipment from the image, and generates the first signal including control parameters enabling the light source to emit the first laser light in a direction including the position of the obstacle, in a case where the obstacle is positioned on the traveling route.

13. The ranging system of claim 3, further comprising:
a movable mount on which the ranging system is installed, wherein
the second control circuit changes an emission direction of the first laser light by controlling the movable mount based on the information.

14. The ranging system of any one of claims 3 to 13, wherein the transportation equipment is a railroad vehicle.
